# EUROPÄISCHE PATENTANMELDUNG

(11) **EP 4 656 864 A1**
(43) Veröffentlichungstag der Anmeldung: **03.12.2025**
(21) Anmeldenummer: 25179147.1
(22) Anmeldetag: 27.05.2025
(51) Int. Cl.: F02M 21/02

(54) **RÜCKFÜHRUNGSSYSTEM ZUM RÜCKFÜHREN VON REZIRKULIERTEM ANTRIEBS-FLÜSSIGGAS, BETREFFENDES VERFAHREN SOWIE VERWEN-DUNG**

(30) Priorität: 28.05.2024 DE 102024114980
(71) Anmelder: TGE Marine Gas Engineering GmbH, 53175 Bonn (DE)
(72) Erfinder: Beyer, Olaf, 53639 Königswinter (DE); Zacheja, Tobias, 53757 Sankt Augustin (DE); Wellen, Julius, 50823 Köln (DE)
(74) Vertreter: Eisenführ Speiser

(57) **Zusammenfassung**

Die Erfindung betrifft ein Rückführungssystem (2) zum Rückführen von rezirkuliertem Antriebs-Flüssiggas, insbesondere von rezirkuliertem Antriebs-Flüssiggas einer Hauptmaschine (4) und/oder Hilfsmaschine (6) eines Schiffes (100).

Erfindungsgemäß wird vorgeschlagen, dass das Rückführungssystem (2) eine Rückgewinnungseinrichtung (8) aufweist, wobei die Rückgewinnungseinrichtung (8) über eine Bereitstellungsleitung (10a, 10b) fluidleitend mit einer Hauptmaschine (4) oder einer Hilfsmaschine (6) verbunden ist und eine Kühleinrichtung (26) aufweist, welche dazu eingerichtet ist, den von der Hauptmaschine (4) und/oder der Hilfsmaschine (6) zugeführten Rezirkulationsstrom (12a, 12b) zu kühlen, ein Gas-Bereitstellungssystem (14), welches dazu eingerichtet ist, der Hauptmaschine (4) oder der Hilfsmaschine (6) Antriebs-Flüssiggas bereitzustellen, wobei das Gas-Bereitstellungssystem (14) mit der Rückgewinnungseinrichtung (8) über eine Rezirkulationsleitung (16) fluidleitend verbunden ist und wobei der Rezirkulationsleitung (16) ein Steuerventil (18) zum Einstellen eines Fluidflusses durch die Rezirkulationsleitung (16) zugeordnet ist, und einen Rezirkulationsbehälter (20), welcher über eine Einlassleitung (22) mit der Rückgewinnungseinrichtung (8) und über eine Auslassleitung (24) mit dem Gas-Bereitstellungssystem (14) verbunden ist.

## Beschreibung

Die Erfindung betrifft ein Rückführungssystem zum Rückführen von rezirkuliertem Antriebs-Flüssiggas, insbesondere von rezirkuliertem Antriebs-Flüssiggas einer Hauptmaschine und/oder Hilfsmaschine eines Schiffes.

In der maritimen Industrie ist durch die gesetzten Klimaziele der International Maritime Organisation (IMO) und anderer zwischenstaatlicher Organisationen eine Dekarbonisierung der Schifffahrt angestrebt. Eine Möglichkeit zur Erreichung dieses Zieles ist der Einsatz von alternativen Kraftstoffen, die keinen Kohlenstoff enthalten, wie bspw. Ammoniak. Verbrennungsmotoren, die sowohl mit konventionellen Treibstoffen als auch mit Ammoniak betrieben werden können, sowie die zugehörigen Ammoniak-Kraftstoff-Einspeisesysteme befinden sich aktuell in der Entwicklung. Derartige Verbrennungsmotoren werden auch als Dual-Fuel-Motoren bezeichnet.

Ein großer Teil der bereits bekannten oder sich derzeit in Entwicklung befindlichen Verbrennungsmotoren verfügt über eine Flüssigkeitseinspritzung, wobei von dem Verbrennungsmotor nicht genutztes Antriebs-Flüssiggas, auch als Fuelgas bezeichnet, in Form von sogenannten Rezirkulationsströmen auftritt und möglichst effizient der Hauptmaschine oder Hilfsmaschine erneut zugeführt werden soll.

Eine wesentliche Herausforderung hierbei liegt darin, das Auftreten von sogenanntem Flashgas innerhalb eines betreffenden Rezirkulationssystems bzw. einem Gas-Bereitstellungssystem für die Hauptmaschine oder die Hilfsmaschine zu vermeiden. Darüber hinaus besteht ein wesentliches Ziel darin, das Stocken von potenziellen Ölanteilen innerhalb des Rezirkulationsstromes und im Gas-Bereitstellungsystem zu verhindern und insgesamt den Energieverbrauch von betreffenden Rückführungssystemen zu reduzieren.

Vor diesem Hintergrund lag der Erfindung die Aufgabe zugrunde, ein Rückführungssystem der eingangs genannten Art dahingehend weiterzubilden, dass die im Stand der Technik aufgefunden Nachteile möglichst weitgehend behoben werden. Insbesondere soll ein effizientes Rückführungssystem angegeben werden, welches energiesparend zu betreiben ist und eine verbesserte Ausnutzung des Antriebs-Flüssiggases Ammoniak bzw. alternativer Antriebs-Flüssiggase gewährleisten soll.

Erfindungsgemäß wird die Aufgabe bei einem Rückführungssystem der eingangs genannten Art dadurch gelöst, dass dieses eine Rückgewinnungseinrichtung aufweist, wobei die Rückgewinnungseinrichtung über eine Bereitstellungsleitung fluidleitend mit einer Hauptmaschine oder einer Hilfsmaschine verbunden ist und eine Kühleinrichtung aufweist, welche dazu eingerichtet ist, den von der Hauptmaschine und/oder Hilfsmaschine zugeführten Rezirkulationsstrom zu kühlen, ein Gas-Bereitstellungssystem, welches dazu eingerichtet ist, der Hauptmaschine oder der Hilfsmaschine Antriebsflüssiggas bereitzustellen, wobei das Gas-Bereitstellungssystem mit der Rückgewinnungseinrichtung über eine Rezirkulationsleitung fluidleitend verbunden ist und wobei der Rezirkulationsleitung ein Steuerventil zum Einstellen eines Fluidflusses durch die Rezirkulationsleitung zugeordnet ist und einem Rezirkulationsbehälter, welcher über eine Einlassleitung mit der Rückgewinnungseinrichtung und über eine Auslassleitung mit dem Gas-Bereitstellungssystem verbunden ist.

Die Erfindung macht sich die Erkenntnis zunutze, dass durch die Verwendung einer Kühleinrichtung in der Rückgewinnungseinrichtung die Rezirkulationsströme, die zumeist eine Temperatur größer 60° Celsius aufweisen, gekühlt werden können. Die Kühlung der Rezirkulationsströme mit Hilfe der Rückgewinnungseinrichtung und die anschließende Zuführung der gekühlten Rezirkulationsströme zu einem Gas-Bereitstellungsystem stellt eine effiziente Möglichkeit zur erneuten Nutzung des rezirkulierten Gases als Antriebs-Flüssiggas im Normalbetrieb der Hauptmaschine bzw. der Hilfsmaschine bei Nutzung von beispielsweise Ammoniak als Antriebs-Flüssiggas dar.

Für den Fall, dass das Rückführungssystem von Antriebs-Flüssiggas entleert werden soll, werden zumeist Inertgase, beispielsweise Stickstoff, dazu verwendet, das System zu spülen. Umgekehrt befindet sich nach einem Spülvorgang Stickstoff in den Leitungen und muss aus diesen ausgeschleust werden, wenn eine Wiederaufnahme des Betriebs mit Antriebs-Flüssiggas, beispielsweise Ammoniak, erfolgen soll. Die Erfindung macht sich insoweit die Erkenntnis zunutze, dass es sich als vorteilhaft erwiesen hat, die betreffenden Ströme einem Rezirkulationsbehälter zuzuführen, der sowohl als Sammelbehälter als auch als Flüssiggasabscheider dient. Vorzugsweise wird der Rezirkulationsbehälter auf einem niedrigeren Druckniveau betrieben als die Rückgewinnungseinrichtung und unterhalb des zur Sättigungstemperatur zugehörigen Sättigungsdruckes, sodass in dem Rezirkulationsbehälter sogenanntes Flashgas entsteht. Zudem werden auch größere Mengen an Stickstoff in dem Behälter gesammelt, wobei der Stickstoff typischerweise zum Spülen des Rückführungssystems verwendet wird und in dem Rezirkulationsbehälter zusammen mit Antriebs-Flüssiggas gesammelt werden kann.

Die Kombination aus erfindungsgemäßer Rückgewinnungseinrichtung, Gas-Bereitstellungssystem und Rezirkulationsbehälter ermöglicht somit, dass der Verbleib des Ammoniaks bzw. Fuelgases im System in allen Betriebsszenarien maximiert wird, d. h. sowohl im Normalbetrieb als auch bei Spülvorgängen oder bei beim Umschalten des Systems auf die Verwendung von Antriebs-Flüssiggas, beispielsweise Ammoniak. Durch das Zuführen der Rezirkulationsströme zu dem Gas-Bereitstellungssystem und von dort erneut zu der Hauptmaschine und/oder Hilfsmaschine erfolgt ein besonders effizienter Umgang mit der Ressource Fuelgas. Auch sinkt der spezifische Energieverbrauch der Anlage, da die von dem Gas-Bereitstellungssystem zu fördernde Fuelgas-Menge reduziert wird.

Gemäß einer Ausführungsform weist das Rückführungssystem eine Steuerungseinrichtung auf, welche dazu eingerichtet ist in einem ersten Betriebsmodus das Steuerventil der Rezirkulationsleitung freizugeben, sodass der Rezirkulationsstrom insbesondere vollständig dem Gas-Bereitstellungssystem zugeführt wird, und das Steuerventil in einem zweiten Betriebsmodus abzusperren, sodass dem Rezirkulationsbehälter rezirkuliertes Antriebs-Flüssiggas von der Rückführungseinrichtung zugeführt wird. Die Steuerungseinrichtung ermöglicht damit das automatisierte Umschalten zwischen den einzelnen Betriebsmodi, d. h. insbesondere zwischen dem Normalbetriebsmodus, bei dem der Rezirkulationsstrom vollständig dem Gas-Bereitstellungssystem zugeführt werden soll und jenem Betriebsmodus, bzw. jenen Betriebsmodi, bei denen das Rückführungssystem entweder mit Fuelgas befüllt oder von diesem befreit werden soll. In diesem Fall wird das Gemisch aus Stickstoff und Fuelgas zunächst dem Rezirkulationsbehälter zugeführt.

Gemäß einer Ausführungsform ist der Rezirkulationsleitung ein Drucksensor zur Sensierung eines Fluiddruckes in der Rezirkulationsleitung zugeordnet, wobei die Steuerungseinrichtung dazu eingerichtet ist, in dem ersten Betriebsmodus durch Steuerung des Steuerventils einen Gegendruck in der Bereitstellungsleitung derart einzustellen, dass der Rezirkulationsstrom in der Flüssigphase verbleibt. Die betreffenden Ströme werden sodann gewissermaßen an dem Rezirkulationsbehälter vorbei direkt dem Gas-Bereitstellungssystem zugeführt. Dabei erfolgt die Steuerung des Steuerventils und damit die Einstellung des Gegendrucks vorzugsweise dergestalt, dass kein Gas in der Rezirkulationsleitung entsteht und/oder der Flashgasanteil, der beim Entspannen über das Steuerventil entsteht, möglichst minimiert wird.

Gemäß einer Ausführungsform ist dem Rezirkulationsbehälter ein Füllstandsensor zugeordnet, welcher dazu eingerichtet ist, einen Fluid-Füllstand in dem Rezirkulationsbehälter zu sensieren, wobei der Füllstandsensor datenleitend mit der Steuerungseinrichtung verbunden ist und die Steuerungseinrichtung dazu eingerichtet ist, die Auslassleitung freizugeben, wenn ein definierter Füllstand in dem Rezirkulationsbehälter überschritten wird. Wenn in dem Rezirkulationsbehälter Flüssigkeit anfällt, und einen definierten Füllstand überschreitet, kann mit anderen Worten der Rezirkulationsbehälter möglichst vollständig entleert werden in Richtung des Gas-Bereitstellungssystems, ohne dass Gas dem Gas-Bereitstellungssystem zugeführt wird, sondern vielmehr ausschließlich Flüssigkeit.

Gemäß einer Ausführungsform weist das Rückführungssystem eine absperrbare Bypassleitung auf, welche die Bereitstellungsleitung unmittelbar mit der Einlassleitung fluidleitend verbindet, wobei dem Rezirkulationsbehälter ein Drucksensor zugeordnet ist, welcher dazu eingerichtet ist, einen Innendruck in dem Rezirkulationsbehälter zu sensieren, und wobei der Drucksensor datenleitend mit einer Steuerungseinrichtung verbunden ist, welche dazu eingerichtet ist, den Rezirkulationsstrom über die Bypassleitung dem Rezirkulationsbehälter zuzuführen, wenn ein definierter Minimaldruck in dem Rezirkulationsbehälter unterschritten wird. Im Rahmen dieser Minimaldruckregelung wird das Ziel verfolgt, den Druck in dem Rezirkulationsbehälter auf einem Mindestwert zu halten, damit potenziell gesammelte Flüssigkeit abgeführt werden kann. Die Druckmessung erfolgt am Behälter vorzugsweise mittels eines Drucktransmitters. Falls der Druck unterhalb eines definierten Minimaldruck sinken sollte, wird dem Rezirkulationsbehälter über die Bypassleitung warmes rezirkuliertes Gas zugeführt, welches die Kühleinrichtung der Rückgewinnungseinrichtung nicht passiert. Dieses warme Gas erhöht den Druck im Behälter. Nach Erreichen des definierten Minimaldrucks kann die Zuführung von warmem Gas über die Bypassleitung gestoppt werden.

Gemäß einer Ausführungsform wird der Innendruck in dem Rezirkulationsbehälter derart gesteuert, dass dieser größer ist als der Fluiddruck in einer Zuführleitung zu einer Hochdruckpumpe des Gas-Bereitstellungssystems.

Gemäß einer Ausführungsform weist das System einen Sammelbehälter auf, welcher über eine Leitung, welche ein Ablassventil aufweist, mit dem Rezirkulationsbehälter verbunden ist, und wobei die Steuerungseinrichtung dazu eingerichtet ist, dass Ablassventil zu öffnen, wenn ein definierter Maximaldruck in dem Rezirkulationsbehälter überschritten wird. Durch das Öffnen des Ablassventils wird überschüssiges Gas abgelassen, sodass sich der Druck in dem Rezirkulationsbehälter wieder reduziert.

Gemäß einer Ausführungsform weist das Gas-Bereitstellungssystem einen Rekondensierer auf, wobei die Rezirkulationsleitung fluidleitend mit dem Rekondensierer verbunden ist, insbesondere, wobei das Gas-Bereitstellungssystem ferner eine mit dem Rekondensierer fluidleitend verbundene Kompressionseinrichtung aufweist, welche dazu eingerichtet ist, das rezirkulierte Antriebs-Flüssiggas und das aus einem Flüssiggastank entnommene Antriebs-Flüssiggas auf einen Eingangsdruck der Hauptmaschine oder Hilfsmaschine aufzudrücken.

Das Gas-Bereitstellungssystem ermöglicht das Zusammenführen von Rezirkulationsströmen und Fuelgas-Strömen aus dem Flüssiggastank sowie eine entsprechende Behandlung, insbesondere Druckbeaufschlagung, des Antriebs-Flüssiggases auf einen Eingangsdruck der Hauptmaschine oder Hilfsmaschine.

Gemäß einer Ausführungsform ist der Rekondensierer über eine Flüssiggasleitung mit einem Flüssiggastank fluidleitend verbunden, wobei der Flüssiggasleitung eine Erwärmungseinrichtung zugeordnet ist, welche dazu eingerichtet ist, das Antriebs-Flüssiggas auf eine Temperatur oberhalb eines Stockpunktes eines in den Rezirkulationsströmen enthaltenen Maschinenöls zu erwärmen. Rezirkulationsströme können grundsätzlich mit Maschinenöl verunreinigt sein. Durch das Vorsehen einer Erwärmungseinrichtung kann das Fuelgas angewärmt werden, sodass ein Stocken des Öls verhindert wird. Die Anwärmung ist vorzugsweise nur dann erforderlich, wenn die Rezirkulationsströme Öl mit einem Stockpunkt oberhalb der atmosphärischen Sättigungstemperatur des Ammoniaks enthalten. Vorzugsweise wird zum Zwecke der Erwärmung des Öls eine Erwärmungseinrichtung eingesetzt. Alternativ können Bypassströme der Kompressionseinrichtung einem kalten Flüssigstrom zugemischt werden, sodass die Mischtemperatur im erforderlichen Bereich liegt.

Vorzugsweise wird der Druck im Rezirkulationsbehälter über dem Druck des Flüssigkeitszustroms zu dem Rekondensierer gehalten, damit die gesammelte Flüssigkeit durch die Druckdifferenz dem Rekondensierer zugeführt werden kann. Das gewählte Druckniveau gewährleistet außerdem, dass die Flüssigkeit im Rezirkulationsbehälter gegenüber der nachgeförderten Flüssigkeit aus dem Flüssiggastank dem Prozess bevorzugt wieder zugeführt wird. Die Druckregelung in dem Rezirkulationsbehälter ist vorzugsweise derart gewählt, dass der Druck ausreicht, um die Flüssigkeit in ausreichender Menge dem Rekondensierer zuzuführen und zum anderen die entstehende Flashgas-Menge, die bei der Entspannung über das Steuerventil bzw. in den Rezirkulationsbehälter entsteht, möglichst gering gehalten wird. Gemäß einer Ausführungsform werden für den Fall, dass das Rückführungssystem entleert und mit Inertgas, insbesondere Stickstoff, gespült wird, Ventile der einzelnen Rückführstränge geöffnet, die wiederum ein Gemisch aus Flüssigkeit und Gas dem Rezirkulationsbehälter zuführen.

Gemäß einer Ausführungsform stammen die Rezirkulationsströme, die dem Rekondensierer zugeführt werden entweder von dem Rezirkulationsbehälter oder aber von der Gegendruckregelung des Rezirkulationssystems. Dabei haben die betreffenden Ströme vorzugsweise einen Gas-Anteil. Das Druckniveau und die Menge des Flüssigzuführstroms, der aus dem Flüssiggastank stammt, wird vorzugsweise derart konditioniert, dass eine ausreichende Unterkühlung vorhanden ist, sodass der Flashgasanteil des Rezirkulationsstromes vollständig absorbiert werden kann. Vorzugsweise wird die Unterkühlung auch dergestalt gewählt, dass eine Restunterkühlung für den nachfolgenden Betrieb der Kompressionseinrichtung, insbesondere einer Hochdruck-Fuelgas-Pumpe, verbleibt. Gemäß einer Ausführungsform bewirkt der Rekondensierer neben der eigentlichen Rekondensation, dass eine möglichst homogene Mischung der zugeführten Ströme erfolgt.

Insgesamt weist das erfindungsgemäße Rückführungssystem folgende Vorteile auf: Zum einen wird der Verbleib des Produktes im System in allen Betriebsszenarien maximiert. Zum anderen wird durch das Zuführen der Rezirkulationsströme in die Ausspeisungen zu den Motoren, d. h. der Hauptmaschine und/oder wenigstens einen Hilfsmaschine eine effiziente Behandlung des Fuelgases bewirkt. Ferner wird das Stocken von potenziellen Ölanteilen durch das entsprechende Temperaturmanagement der Rezirkulationsströme und der Fuelgas-Ströme im Allgemeinen verhindert. Im Übrigen sinkt auch der spezifische Energieverbrauch der Anlage, da die durch die Hochdruckpumpen zu fördernde Fluidmenge reduziert wird. Durch die Prozessführung wird auch ein kostengünstiges Rückführ-System bereitgestellt, da zum einen der Auslegungsdruck des Rezirkulationsbehälters unterhalb des Auslegungsdrucks des Rückführsystems liegen kann und zum anderen die permanenten Rezirkulationsströme am Rezirkulationsbehälter vorbei geführt werden.

Die Erfindung ist vorstehend unter Bezugnahme auf ein Rückführungssystem beschrieben worden. In einem weiteren Aspekt betrifft die Erfindung ein Schiff, insbesondere ein Frachtschiff, mit einem Flüssiggasantrieb und einem Rückführungssystem zum Rückführen von rezirkuliertem Antriebs-Flüssiggas. Vorzugsweise ist der Flüssiggasantrieb als Dual-Fuel-Antrieb ausgebildet, d. h. er ist dazu eingerichtet, neben einem konventionellen Brennstoff, wie bspw. Schweröl, mit Ammoniak betrieben zu werden. Die Erfindung löst die eingangs bezeichnete Aufgabe in Bezug auf das Schiff, indem das Rückführungssystem nach einem der vorstehenden Ansprüche ausgebildet ist. Das Schiff macht sich die gleichen Vorteile und bevorzugten Ausführungsformen zunutze wie das erfindungsgemäße Rückführungssystem und umgekehrt. Diesbezüglich wird auf die obigen Ausführungen verwiesen und deren Inhalt hiermit einbezogen.

In einem weiteren Aspekt betrifft die Erfindung ein Verfahren zum Rückführen von rezirkuliertem Antriebs-Flüssiggas mit einem Rückführungssystem nach einem der vorstehenden Ausführungsbeispiele. Das Verfahren weist die Schritte auf: Zuführen eines Rezirkulationsstromes einer Hauptmaschine und/oder Hilfsmaschine zu einer Rückgewinnungseinrichtung, Kühlen des Rezirkulationsstromes in der Rückgewinnungseinrichtung, Zuführen des gekühlten Rezirkulationsstromes zu einem Gas-Bereitstellungssystem, insbesondere einem Rekondensierer des Gas-Bereitstellungssystems, wobei ein Gegendruck des Rezirkulationsstromes, insbesondere in einer Bereitstellungsleitung, derart eingestellt wird, dass der Rezirkulationsstrom in der Flüssigphase verbleibt, oder Zuführen des gekühlten Rezirkulationsstromes zu einem Rezirkulationsbehälter und Sammeln des rezirkulierten Antriebs-Flüssiggases in dem Rezirkulationsbehälter.

Das Verfahren macht sich die Erkenntnis zunutze, dass im regulären Betrieb der Hauptmaschine und/oder Hilfsmaschine der Rezirkulationsstrom nach weiteren Aufbereitungsschritten erneut der Hauptmaschine und/oder Hilfsmaschine zugeführt wird, wobei durch die Einstellung des Gegendruckes sichergestellt wird, dass der Rezirkulationsstrom in der Flüssigphase verbleibt. In Szenarien, in denen bspw. ein Ammoniakbetrieb aufgenommen werden soll oder das System nach einem solchen Betrieb gespült werden soll, können die Rezirkulationsströme, die in diesen Szenarien bspw. auch das zum Spülen verwendete Gas, bspw. Stickstoff enthalten, einem Rezirkulationsbehälter zugeführt und dort gesammelt werden.

Das Verfahren wird durch die Schritte weitergebildet: Spülen des Rückführungssystems mit Inertgas, Sammeln des zum Spülen verwendeten Inertgases in dem Rezirkulationsbehälter.

Das Verfahren wird ferner durch die Schritte weitergebildet: Zuführen eines ungekühlten Rezirkulationsstroms über eine Bypassleitung zu dem Rezirkulationsbehälter, wenn ein definierter Minimaldruck in dem Rezirkulationsbehälter unterschritten wird, und/oder Öffnen eines Ablassventils des Rezirkulationsbehälters, wenn ein definierter Maximaldruck in dem Rezirkulationsbehälter überschritten wird. Auf diese Weise kann der Druck innerhalb des Rezirkulationsbehälters zwischen einem Minimaldruck und einem Maximaldruck gesteuert werden.

Gemäß einer Ausführungsform weist das Verfahren ferner die Schritte auf: Bereitstellen von Antriebs-Flüssiggas aus einem Flüssiggastank an einen Rekondensierer des Gas-Bereitstellungssystems, wobei das Antriebs-Flüssiggas aus dem Flüssiggastank auf eine Temperatur oberhalb eines Stockpunktes des in den Rezirkulationsströmen enthaltenen Maschinenöls erwärmt wird, Bereitstellen des gekühlten Rezirkulationsstroms an den Rekondensierer, Mischen des Antriebsgases aus dem Flüssiggastank und dem gekühlten Rezirkulationsstrom, Aufdrücken des Gemisches und Bereitstellen des Antriebsgases an eine Hauptmaschine und/oder Hilfsmaschine. Durch die vorgeschlagene Erwärmung wird vermieden, dass das Maschinenöl stockt.

In einem weiteren Aspekt betrifft die Erfindung die Verwendung eines Rückführungssystems nach einem der vorstehenden Ausführungsbeispiele zum Rückführen von rezirkuliertem Antriebs-Flüssiggas, welches zum Antrieb einer Hauptmaschine oder von einer oder mehreren Hilfsmaschinen eines Schiffes vorgesehen ist. Dabei ist das Antriebs-Flüssiggas insbesondere ausgewählt aus der Liste umfassend: LPG, Ammoniak, Methanol.

Die Verwendung eines erfindungsgemäßen Rückführungssystems hat sich insbesondere bei der Verwendung von sogenannten Dual-Fuel-Motoren, die zum einen mit klassischen Treibstoffen verwendet werden, bspw. Schweröl, und auch mit einem der genannten Treibstoffe, insbesondere Ammoniak, bewährt.

Die Erfindung wird nachfolgend anhand von bevorzugten Ausführungsbeispielen unter Bezugnahme auf die beigefügten Figuren näher beschrieben.

Hierbei zeigen:
- Fig. 1: ein erfindungsgemäßes Rückführungssystem in einer schematischen Darstellung;
- Fig. 2: ein erfindungsgemäßes Schiff mit einem Rückführungssystem in einer schematischen Darstellung; und
- Fig. 3: ein Blockschaltbild eines erfindungsgemäßen Verfahrens.

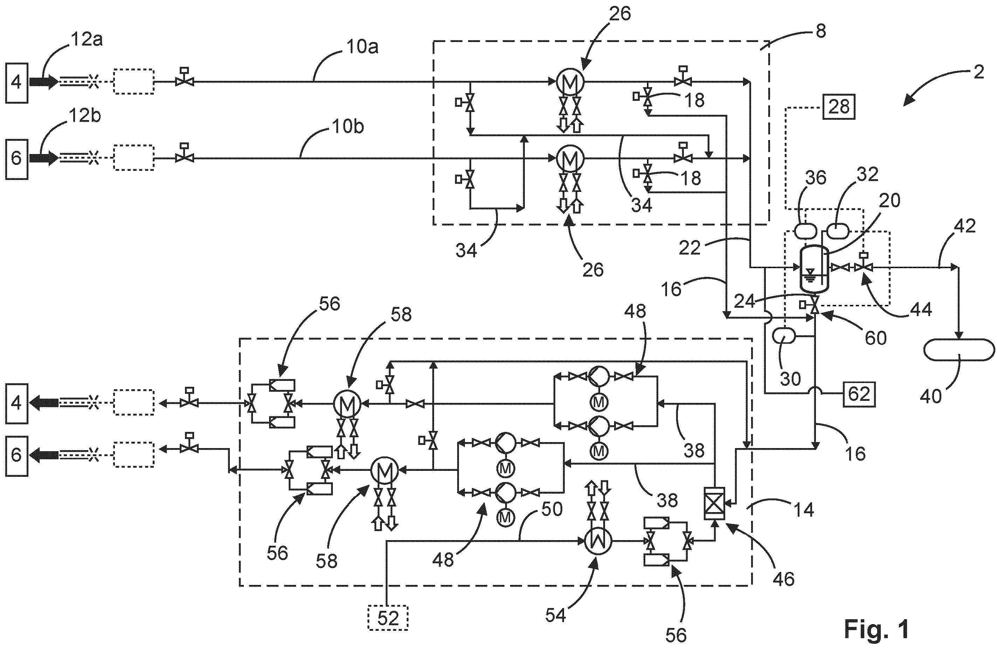

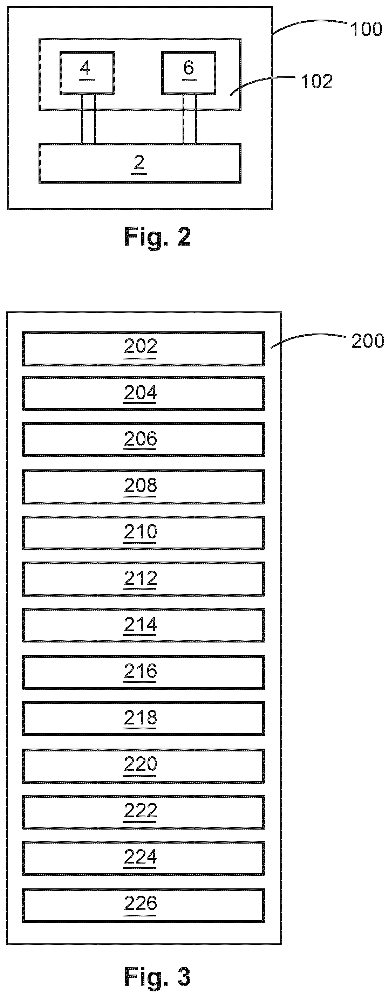

Fig. 1 zeigt ein Rückführungssystem 2 zum Rückführen von rezirkuliertem Antriebs-Flüssiggas einer Hauptmaschine 4 und einer Hilfsmaschine 6 eines Schiffes 100 (vgl. Figur 2). In dem Ausführungsbeispiel der Figur 1 ist exemplarisch genau eine Hauptmaschine 4 und eine Hilfsmaschine 6 gezeigt. Es ist jedoch genauso möglich, eine oder mehrere Hauptmaschinen 4 und/oder eine oder mehrere Hilfsmaschinen 6 mit dem entsprechenden Rückführungssystem 2 zu betreiben. Der Hauptmaschine 4 entspringt dabei ein Rezirkulationsstrom 12a und der Hilfsmaschine 6 ein Rezirkulationsstrom 12b. Die beiden Rezirkulationsströme 12a, 12b werden über Bereitstellungsleitungen 10a und 10b einer Rückgewinnungseinrichtung 8 zugeführt. Die Rückgewinnungseinrichtung 8 weist für jeden Rezirkulationsstrom 12a, 12b jeweils eine Kühleinrichtung 26 auf. Die Kühleinrichtung 26 ist dazu eingerichtet, den von der Hauptmaschine 4 und der Hilfsmaschine 6 zugeführten Rezirkulationsstrom 12a, 12b zu kühlen. In Strömungsrichtung hinter der Kühleinrichtung 26 ist die Kühleinrichtung 26 zum einen über eine Einlassleitung 22 mit einem Rezirkulationsbehälter 20 verbunden und zum anderen unter Zwischenschaltung eines Steuerventils 18 über die Rezirkulationsleitung 16 mit einem Gas-Bereitstellungssystem, insbesondere einem Rekondensierer 46 des Gas-Bereitstellungssystems. Mit der Einlassleitung 22 ist ferner ein Rückführbehälter 62 fluidleitend verbunden. Im Bereich der Auslassleitung ist ein Ventil 60 vorgesehen.

Darüber hinaus sind Bypassleitungen 34 vorgesehen, die stromaufwärts der Kühleinrichtungen 26 angeordnet sind und dazu eingerichtet sind, heißes Gas, d. h. solches Gas, welches noch nicht durch die Kühleinrichtungen 26 gekühlt wurde, dem Rezirkulationsbehälter 20 zuzuführen. Die Bypassleitung 34 ist durch Ventile absperrbar. Das Steuerventil 18 ermöglicht ein Einstellen eines Fluidflusses durch die Rezirkulationsleitung 16. Der Rezirkulationsbehälter 20 ist über die Einlassleitung 22 mit der Rückgewinnungseinrichtung 8 und über eine Auslassleitung 24 ebenfalls mit dem Gas-Bereitstellungssystem 14, insbesondere dem Rekondensierer 46 verbunden.

Das Rückführungssystem 2 weist ferner eine Steuerungseinrichtung 28 auf. Diese ist dazu eingerichtet in einem ersten Betriebsmodus das Steuerventil 18 der Rezirkulationsleitung 16 freizugeben, sodass der Rezirkulationsstrom 12a, 12b insbesondere vollständig dem Gas-Bereitstellungssystem 14 zugeführt wird und das Steuerventil 18 in einem zweiten Betriebsmodus abzusperren, sodass dem Rezirkulationsbehälter 20 rezirkuliertes Antriebs-Flüssiggas von der Rückgewinnungseinrichtung 8 zugeführt wird. Der Rezirkulationsleitung 16 ist ein Drucksensor 30 zugeordnet. Der Drucksensor 30 ist dazu eingerichtet, den Fluiddruck in der Rezirkulationsleitung 16 zu sensieren. Die Steuerungseinrichtung 28 ist ferner dazu eingerichtet, in dem ersten Betriebsmodus durch Steuerung des Steuerventils 18 einen Gegendruck in der Bereitstellungsleitung 10a, 10b derart einzustellen, dass der Rezirkulationsstrom 12a, 12b in der Flüssigphase verbleibt. Dem Rezirkulationsbehälter 20 ist ein Füllstandsensor 32 zugeordnet. Der Füllstandsensor 32 ist dazu eingerichtet, einen Fluidfüllstand in dem Rezirkulationsbehälter 20 zu sensieren. Der Füllstandsensor 32 ist datenleitend mit der Steuerungseinrichtung 28 verbunden. Die Steuerungseinrichtung 28 ist dazu eingerichtet, das Ventil 60 zu öffnen und die Flüssigkeit durch die Auslassleitung 24 freizugeben, wenn ein definierter Füllstand in dem Rezirkulationsbehälter 20 überschritten wird.

Dem Rezirkulationsbehälter 20 ist ferner ein Drucksensor 36 zugeordnet. Der Drucksensor 36 ist dazu eingerichtet, einen Innendruck in dem Rezirkulationsbehälter 20 zu sensieren. Der Drucksensor 36 ist datenleitend mit der Steuerungseinrichtung 28 verbunden. Die Steuerungseinrichtung 28 ist dazu eingerichtet, den Rezirkulationsstrom 12a, 12b über die Bypassleitung 34 dem Rezirkulationsbehälter 20 zuzuführen, wenn ein definierter Minimaldruck in dem Rezirkulationsbehälter 20 unterschritten wird. In diesem Fall wird dem Rezirkulationsbehälter 20 ungekühltes rezirkuliertes Fluid zugeführt, welches die Kühleinrichtungen 26 nicht passiert. Der Innendruck in dem Rezirkulationsbehälter 20 wird ferner derart gesteuert, dass dieser größer ist als der Fluiddruck in der Flüssiggaszuführung in den Recondensierer 46. Der Druck am Eintritt des Recondensierers 46 ist höher als der in den Zuführleitungen 38.

Das Rückführungssystem 2 weist ferner einen Sammelbehälter 40 auf. Der Sammelbehälter 40 ist über eine Leitung 42, welche ein Ablassventil 44 aufweist, mit dem Rezirkulationsbehälter 20 verbunden. Die Steuerungseinrichtung 28 ist dazu eingerichtet, dass Ablassventil 44 zu öffnen, wenn ein definierter Maximaldruck in dem Rezirkulationsbehälter 20 überschritten wird. Die Rezirkulationsleitung 16 und die Auslassleitung 24 sind fluidleitend mit dem Rekondensierer 46 verbunden. Das Gas-Bereitstellungssystem 14 weist eine mit dem Rekondensierer 46 fluidleitend verbundene Kompressionseinrichtung 48 auf, die auch als Hochdruckpumpe bezeichnet wird. Die Kompressionseinrichtung 48 ist dazu eingerichtet, das rezirkulierte Antriebs-Flüssiggas und das aus einem Flüssiggastank 52 entnommene Antriebs-Flüssiggas auf einen Eingangsdruck der Hauptmaschine 4 aufzudrücken. Stromabwärts zu der Kompressionseinrichtung 48 ist ferner ein Wärmetauscher 58 vorgesehen sowie diesem nachgelagert ein Filter 56. Von dort gelangt das druckbeaufschlagte und gefilterte Fuelgas zu der Hauptmaschine 4 bzw. der Hilfsmaschine 6. Auf gleiche Weise ist auch die Hilfsmaschine 6 an den Rekondensierer 46 angebunden. Der Rekondensierer 46 ist über eine Zuführleitung 38 mit einer Kompressionseinrichtung 48 verbunden. Das komprimierte Fluid gelangt von dort nach dem Passieren eines Wärmetauschers 58 und eines Filters 56 zu der Hilfsmaschine 6. Im Betrieb wird entweder der Rezirkulationsstrom 12a, 12b dem Rezirkulationsbehälter 20 zugeführt oder ein Fluidstrom ausgehend vom dem Rückführbehälter 62, aber vorzugsweise nicht beide Ströme gleichzeitig, was sich vorzugsweise auf die Dimensionierung des Rezirkulationsbehälters 20 auswirkt.

Der Flüssiggastank 52 ist über eine Leitung 50 mit einer Erwärmungseinrichtung 54 verbunden. Das aus dem Tank 52 entnommene Fuelgas gelangt von dort nach dem Passieren eines Filters 56 zu dem Rekondensierer 46. Die Erwärmungseinrichtung 54 dient dazu, dass Antriebs-Flüssiggas auf eine Temperatur oberhalb eines Stockpunktes eines in den Rezirkulationsströmen 12a, 12b enthaltenen Maschinenöls zu erwärmen.

Figur 2 zeigt in Form einer schematischen Darstellung ein Schiff 100. Das Schiff 100 ist insbesondere als Frachtschiff ausgebildet. Das Schiff 100 weist ein Flüssiggasantrieb 102 auf, der vorzugsweise als Dual-Fuel-Antrieb ausgebildet ist. Das Schiff 100 weist ferner ein Rückführungssystem 2 auf, wobei das Rückführungssystem 2 vorzugsweise wie in Figur 1 gezeigt ausgebildet ist. Das Rückführungssystem 2 ist über die Bereitstellungsleitungen 10a, 10b mit der Hauptmaschine 4 bzw. der Hilfsmaschine 6 fluidleitend verbunden.

Figur 3 zeigt ein Blockschaltbild eines erfindungsgemäßen Verfahrens 200. Das Verfahren 200 weist die Schritte auf: Zuführen 202 eines Rezirkulationsstromes 12a, 12b einer Hauptmaschine 4 und/oder einer Hilfsmaschine 6 zu einer Rückgewinnungseinrichtung 8, Kühlen 204 des Rezirkulationsstromes 12a, 12b in der Rückgewinnungseinrichtung 8, Zuführen 206 des gekühlten Rezirkulationsstromes 12a, 12b zu einem Gas-Bereitstellungssystem 14, insbesondere einem Rekondensierer 46 des Gas-Bereitstellungssystems 14, wobei ein Gegendruck in der Bereitstellungsleitung 10a, 10b derart eingestellt wird, dass der Rezirkulationsstrom 12a, 12b in der Flüssigphase verbleibt, oder Zuführen 208 des gekühlten Rezirkulationsstrom 12a, 12b zu einem Rezirkulationsbehälter 20 und Sammeln des rezirkulierten Antriebs-Flüssiggases in dem Rezirkulationsbehälter 20, Spülen 210 des Rückführungssystems 2 mit Inertgas, Sammeln 212 des zum Spülen verwendeten Inert-Gases in dem Rezirkulationsbehälter 20, Zuführen 214 eines ungekühlten Rezirkulationsstroms 12a, 12b über eine Bypassleitung 34 zu dem Rezirkulationsbehälter 20, wenn ein definierter Minimaldruck in dem Rezirkulationsbehälter 20 unterschritten wird, und/oder Öffnen 216 eines Ablassventils 44 des Rezirkulationsbehälter 20, wenn ein definierter Maximaldruck in dem Rezirkulationsbehälter 20 überschritten wird, , Bereitstellen 220 von Antriebs-Flüssiggas aus einem Flüssiggastank 52 an einen Rekondensierer 46 des Gas-Bereitstellungssystems 14, wobei das Antriebs-Flüssiggas aus dem Flüssiggastank 52 auf eine Temperatur oberhalb eines Stockpunktes des in den Rezirkulationsströmen 12a, 12b enthaltenen Maschinenöls erwärmt wird, Bereitstellen 222 des gekühlten Rezirkulationsstroms 12a, 12b an den Rekondensierer 46, Mischen 224 des Antriebsgases aus dem Flüssiggastank 52 und dem gekühlten Rezirkulationsstrom 12a, 12b, Aufdrücken 226 des Gemisches und Bereitstellen des Antriebsgases an eine Hauptmaschine 4 und/oder Hilfsmaschine 6. Das Verfahren wurde in Figur 3 zusammenhängend dargestellt. Das Verfahren kann jedoch erfindungsgemäß auch nur einzelne der dargestellten Schritte oder eine Kombination hiervor aufweisen.

### Bezugszeichenliste

- 2: Rückführungssystem
- 4: Hauptmaschine
- 6: Hilfsmaschine
- 8: Rückgewinnungseinrichtung
- 10a: Bereitstellungsleitung Hauptmaschine
- 10b: Bereitstellungsleitung Hilfsmaschine
- 12a: Rezirkulationsstrom Hauptmaschine
- 12b: Rezirkulationsstrom Hilfsmaschine
- 14: Gas-Bereitstellungssystem
- 16: Rezirkulationsleitung
- 18: Steuerventil zum Einstellen eines Fluidflusses durch die Rezirkulationsleitung
- 20: Rezirkulationsbehälter
- 22: Einlassleitung
- 24: Auslassleitung
- 26: Kühleinrichtung
- 28: Steuerungseinrichtung
- 30: Drucksensor der Rezirkulationsleitung und/oder Austrittsleitung
- 32: Füllstandssensor des Rezirkulationsbehälters
- 34: Bypassleitung
- 36: Drucksensor des Rezirkulationsbehälters
- 38: Zuführleitung der Hochdruckpumpe
- 40: Sammelbehälter
- 42: Leitung
- 44: Ablassventil
- 46: Rekondensierer
- 48: Kompressionseinrichtung
- 50: Flüssiggasleitung aus dem Flüssiggastank
- 52: Flüssiggastank
- 54: Erwärmungseinrichtung
- 56: Filter
- 58: Wärmetauscher
- 60: Ventil
- 62: Rückführbehälter
- 100: Schiff
- 102: Flüssiggasantrieb
- 200: Verfahren
- 202: Zuführen eines Rezirkulationsstromes zu einer Rückgewinnungseinrichtung
- 204: Kühlen des Rezirkulationsstromes in der Rückgewinnungseinrichtung
- 206: Zuführen des gekühlten Rezirkulationsstromes zu einem Gas-Bereitstellungssystem
- 208: Zuführen des gekühlten Rezirkulationsstromes zu einem Rezirkulationsbehälter
- 210: Spülen des Rückführungssystems mit Inertgas,
- 212: Sammeln des zum Spülen verwendeten Inertgases in dem Rezirkulationsbehälter
- 214: Zuführen eines ungekühlten Rezirkulationsstroms über eine Bypassleitung
- 216: Öffnen eines Ablassventils des Rezirkulationsbehälters, wenn ein definierter Maximaldruck in dem Rezirkulationsbehälter überschritten wird
- 218: Zuführen von gesammelter Flüssigkeit aus einem Rückführbehälter zu dem Rezirkulationsbehälter
- 220: Bereitstellen von Antriebs-Flüssiggas aus einem Flüssiggastank an einen Rekondensierer des Gas-Bereitstellungssystems
- 222: Bereitstellen des gekühlten Rezirkulationsstromes an den Rekondensierer
- 224: Mischen des Antriebsgases aus dem Flüssiggastank und dem gekühlten Rezirkulationsstrom
- 226: Aufdrücken des Gemisches und Bereitstellen des Antriebsgases an eine Hauptmaschine oder Hilfsmaschine

## Patentansprüche

1. Rückführungssystem (2) zum Rückführen von rezirkuliertem Antriebs-Flüssiggas, insbesondere von rezirkuliertem Antriebs-Flüssiggas einer Hauptmaschine (4) und/oder Hilfsmaschine (6) eines Schiffes (100), mit
- einer Rückgewinnungseinrichtung (8), wobei die Rückgewinnungseinrichtung (8) über eine Bereitstellungsleitung (10a, 10b) fluidleitend mit einer Hauptmaschine (4) oder einer Hilfsmaschine (6) verbunden ist und eine Kühleinrichtung (26) aufweist, welche dazu eingerichtet ist, den von der Hauptmaschine (4) und/oder der Hilfsmaschine (6) zugeführten Rezirkulationsstrom (12a, 12b) zu kühlen,
- einem Gas-Bereitstellungssystem (14), welches dazu eingerichtet ist, der Hauptmaschine (4) oder der Hilfsmaschine (6) Antriebs-Flüssiggas bereitzustellen, wobei das Gas-Bereitstellungssystem (14) mit der Rückgewinnungseinrichtung (8) über eine Rezirkulationsleitung (16) fluidleitend verbunden ist und wobei der Rezirkulationsleitung (16) ein Steuerventil (18) zum Einstellen eines Fluidflusses durch die Rezirkulationsleitung (16) zugeordnet ist,
- und einem Rezirkulationsbehälter (20), welcher über eine Einlassleitung (22) mit der Rückgewinnungseinrichtung (8) und über eine Auslassleitung (24) mit dem Gas-Bereitstellungssystem (14) verbunden ist.

2. Rückführungssystem (2) nach Anspruch 1,
mit einer Steuerungseinrichtung (28), welche dazu eingerichtet ist,
a) in einem ersten Betriebsmodus das Steuerventil (18) der Rezirkulationsleitung (16) freizugeben, sodass der Rezirkulationsstrom (12a, 12b) insbesondere vollständig dem Gas-Bereitstellungssystem (14) zugeführt wird, und
b) das Steuerventil (18) in einem zweiten Betriebsmodus abzusperren, sodass dem Rezirkulationsbehälter (20) rezirkuliertes Antriebs-Flüssiggas von der Rückgewinnungseinrichtung (8) zugeführt wird.

3. Rückführungssystem (2) nach einem der vorstehenden Ansprüche,
wobei der Rezirkulationsleitung (16) ein Drucksensor (30) zur Sensierung eines Fluiddruckes in der Rezirkulationsleitung (16) zugeordnet ist, wobei die Steuerungseinrichtung (28) dazu eingerichtet ist, in dem ersten Betriebsmodus durch Steuerung des Steuerventils (18) einen Gegendruck in der Bereitstellungsleitung (10a, 10b) derart einzustellen, dass der Rezirkulationsstrom (12a, 12b) in der Flüssigphase verbleibt.

4. Rückführungssystem (2) nach einem der vorstehenden Ansprüche,
wobei dem Rezirkulationsbehälter (20) ein Füllstandssensor (32) zugeordnet ist, welcher dazu eingerichtet ist, einen Fluid-Füllstand in dem Rezirkulationsbehälter (20) zu sensieren, wobei der Füllstandssensor (32) datenleitend mit der Steuerungseinrichtung (28) verbunden ist und die Steuerungseinrichtung (28) dazu eingerichtet ist, die Auslassleitung (24) freizugeben, wenn ein definierter Füllstand in dem Rezirkulationsbehälter (20) überschritten wird.

5. Rückführungssystem (2) nach einem der vorstehenden Ansprüche,
mit einer absperrbaren Bypassleitung (34), welche die Bereitstellungsleitung (10a, 10b) unmittelbar mit der Einlassleitung (22) fluidleitend verbindet,
wobei dem Rezirkulationsbehälter (20) ein Drucksensor (36) zugeordnet ist, welcher dazu eingerichtet ist, einen Innendruck in dem Rezirkulationsbehälter (20) zu sensieren, und wobei der Drucksensor (30) datenleitend mit der Steuerungseinrichtung (28) verbunden ist, welche dazu eingerichtet ist, den Rezirkulationsstrom (12a, 12b) über die Bypassleitung (34) dem Rezirkulationsbehälter (20) zuzuführen, wenn ein definierter Minimaldruck in dem Rezirkulationsbehälter (20) unterschritten wird,
insbesondere wobei der Innendruck in dem Rezirkulationsbehälter (20) derart gesteuert wird, dass dieser größer ist als der Fluiddruck in einer Zuführleitung (38) zu einer Hochdruckpumpe (48) des Gas-Bereitstellungssystems (14).

6. Rückführungssystem (2) nach einem der vorstehenden Ansprüche,
wobei das Rückführungssystem (2) einen Sammelbehälter (40) aufweist, welcher über eine Leitung (42), welche ein Ablassventil (44) aufweist, mit dem Rezirkulationsbehälter (20) verbunden ist, und wobei die Steuerungseinrichtung (28) dazu eingerichtet ist, das Ablassventil (44) zu öffnen, wenn ein definierter Maximaldruck in dem Rezirkulationsbehälter (20) überschritten wird.

7. Rückführungssystem (2) nach einem der vorstehenden Ansprüche,
wobei das Gas-Bereitstellungssystem (14) einen Rekondensierer (46) aufweist und wobei die Rezirkulationsleitung (16) fluidleitend mit dem Rekondensierer (46) verbunden ist, insbesondere wobei das Gas-Bereitstellungssystem (14) ferner eine mit dem Rekondensierer (46) fluidleitend verbundene Kompressionseinrichtung (48) aufweist, welche dazu eingerichtet ist, das rezirkulierte Antriebs-Flüssiggas und das aus einem Flüssiggastank (52) entnommene Antriebs-Flüssiggas auf einen Eingangsdruck der Hauptmaschine (4) oder Hilfsmaschine (6) aufzudrücken.

8. Rückführungssystem (2) nach einem der vorstehenden Ansprüche,
wobei der Rekondensierer (46) über eine Flüssiggasleitung (50) mit einem Flüssiggastank (52) fluidleitend verbunden ist und wobei der Flüssiggasleitung (50) eine Erwärmungseinrichtung (54) zugeordnet ist, welche dazu eingerichtet ist, das Antriebs-Flüssiggas auf eine Temperatur oberhalb eines Stockpunktes eines in den Rezirkulationsströmen (12a, 12b) enthaltenen Maschinenöls zu erwärmen.

9. Schiff (100), insbesondere Frachtschiff, mit einem Flüssiggasantrieb (102) und einem Rückführungssystem (2) zum Rückführen von rezirkuliertem Antriebs-Flüssiggas, wobei das Rückführungssystem (2) nach einem der vorstehenden Ansprüche ausgebildet ist.

10. Verfahren (200) zum Rückführen von rezirkuliertem Antriebs-Flüssiggas mit einem Rückführungssystem (2) nach einem der vorstehenden Ansprüche, wobei das Verfahren (200) die Schritte aufweist:
- Zuführen (202) eines Rezirkulationsstromes (12a, 12b) einer Hauptmaschine (4) und/oder Hilfsmaschine (6) zu einer Rückgewinnungseinrichtung (8),
- Kühlen (204) des Rezirkulationsstromes (12a, 12b) in der Rückgewinnungseinrichtung (8),
- Zuführen (206) des gekühlten Rezirkulationsstromes (12a, 12b) zu einem Gas-Bereitstellungssystem (14), insbesondere einem Rekondensierer (46) des Gas-Bereitstellungssystems (14),
wobei ein Gegendruck des Rezirkulationsstromes (12a, 12b), insbesondere in einer Bereitstellungsleitung (10a, 10b), derart eingestellt wird, dass der Rezirkulationsstrom (12a, 12b) in der Flüssigphase verbleibt, oder
- Zuführen (208) des gekühlten Rezirkulationsstromes (12a, 12b) zu einem Rezirkulationsbehälter (20) und Sammeln des rezirkulierten Antriebs-Flüssiggases in dem Rezirkulationsbehälter (20).

11. Verfahren (200) nach Anspruch 10, mit den Schritten:
- Spülen (210) des Rückführungssystems (2) mit Inertgas,
- Sammeln (212) des zum Spülen verwendeten Inertgases in dem Rezirkulationsbehälter (20).

12. Verfahren (200) nach einem der Ansprüche 10 oder 11, mit den Schritten:
- Zuführen (214) eines ungekühlten Rezirkulationsstroms (12a, 12b) über eine Bypassleitung (34) zu dem Rezirkulationsbehälter (20), wenn ein definierter Minimaldruck in dem Rezirkulationsbehälter (20) unterschritten wird, und/oder
- Öffnen (216) eines Ablassventils (44) des Rezirkulationsbehälters (20), wenn ein definierter Maximaldruck in dem Rezirkulationsbehälter (20) überschritten wird.

13. Verfahren (200) nach einem der Ansprüche 10 bis 12, mit den Schritten:
- Bereitstellen (220) von Antriebs-Flüssiggas aus einem Flüssiggastank (52) an einen Rekondensierer (46) des Gas-Bereitstellungssystems (14), wobei das Antriebs-Flüssiggas aus dem Flüssiggastank (52) auf eine Temperatur oberhalb eines Stockpunktes des in den Rezirkulationsströmen (12a, 12b) enthaltenen Maschinenöls erwärmt wird,
- Bereitstellen (222) des gekühlten Rezirkulationsstromes (12a, 12b) an den Rekondensierer (46),
- Mischen (224) des Antriebsgases aus dem Flüssiggastank (52) und dem gekühlten Rezirkulationsstrom (12a, 12b),
- Aufdrücken (226) des Gemisches und Bereitstellen des Antriebsgases an eine Hauptmaschine (4) und/oder Hilfsmaschine (6).

14. Verwendung eines Rückführungssystems (2) nach einem der vorstehenden Ansprüche zum Rückführen von rezirkuliertem Antriebs-Flüssiggas, welches zum Antrieb einer Hauptmaschine (4) oder von Hilfsmaschinen (6) eines Schiffes (100) vorgesehen ist, insbesondere wobei das Antriebs-Flüssiggas oder die Antriebs-Flüssigkeit ausgewählt ist aus der Liste umfassend:
- LPG,
- Ammoniak,
- Methanol.
